# EUROPÄISCHE PATENTANMELDUNG

(11) **EP 2 046 077 A1**
(43) Veröffentlichungstag der Anmeldung: **08.04.2009**
(21) Anmeldenummer: 07019516.9
(22) Anmeldetag: 05.10.2007
(51) Int. Cl.: H04W 4/00

(54) **Telekommunikationssystem mit einer Knotenvorrichtung zum Aufbau einer Mobilfunkverbindung über ein präferiertes Netzwerk**

(71) Anmelder: Cellity AG, 22761 Hamburg (DE)
(72) Erfinder: Körber, Benjamin, 22303 Hamburg (DE); Weitemeyer, Nils, 22763 Hamburg (DE)
(74) Vertreter: Seemann, Ralph

(57) **Zusammenfassung**

Die Erfindung betrifft eine Telekommunikationssystem mit einem Mobilfunknetz (11) und einem Netzwerk, wobei in dem Netzwerk wenigstens eine Knotenvorrichtung (15) vorgesehen ist, wobei im Mobilfunknetz (11) ein Mobilfunk-Endgerät (10) angeordnet ist, das für die elektronische Nachrichtenübermittlung in dem Mobilfunknetz (11) ausgebildet ist, wobei das Mobilfunk-Endgerät (10) eine Steuervorrichtung umfasst, die das Absetzen von einem Ruf in dem Mobilfunknetz (11) steuert. Die Erfindung betrifft ferner ein entsprechen- des Mobilfunk-Endgerät und ein Verfahren zum Verbinden eines Mobilfunk-Endgeräts (10) mit einem weiteren Telekommunikations-Endgerät (17).
Das erfindungsgemäße Telekommunikationssystem zeichnet sich dadurch aus, dass die Steuervorrichtung des Mobilfunk-Endgerätes (10) nach Eingabe einer Telefonnummer einer Bedienperson und nach vorgebbaren Auswahlkriterien einen Ruf (18) zu einem weiteren Telekommunikationsendgerät (17), das über die eingegebene Telefonnummer erreichbar ist, entweder mit der eingegebenen Telefonnummer oder mit einer von der eingegebenen Telefonnummer nach vorgebbaren Kriterien veränderten Telefonnummer in dem Mobilfunknetz (11) absetzt. Entsprechend zeichnet sich das erfindungsgemäße Mobilfunk-Endgerät (10) aus.
Das erfindungsgemäße Verfahren zeichnet sich dadurch aus, dass nach Eingabe oder Wahl einer Telefonnummer, die dem weiteren Telekommunikations-Endgerät (17) zugeordnet ist, von dem Mobilfunk-Endgerät (10) in einer Steuervorrichtung anhand von vorgebbaren Auswahlkriterien entweder ein Ruf mit der eingegebenen oder gewählten Telefonnummer in ein Mobilfunknetz (11) abgesetzt wird oder eine Zuordnung der eingegebenen oder gewählten Telefonnummer zu einer von der eingegebenen oder gewählten Telefonnummer nach vorgebbaren Kriterien veränderten Telefonnummer in das Mobilfunknetz (11) abgesetzt wird.

## Beschreibung

Die Erfindung betrifft ein Telekommunikationssystem mit einem Mobilfunknetz und einem Netzwerk, wobei in dem Netzwerk wenigstens eine Knotenvorrichtung vorgesehen ist, wobei in dem Mobilfunknetz ein Mobilfunk-Endgerät angeordnet ist, das für die elektronische Nachrichtenübermittlung in dem Mobilfunknetz ausgebildet ist, wobei das Mobilfunk-Endgerät eine Steuervorrichtung umfasst, die das Absetzen von einem Ruf in dem Mobilfunknetz steuert. Die Erfindung betrifft ferner ein Mobilfunk-Endgerät, das für die elektronische Nachrichtenübermittlung in einem Mobilfunknetz ausgebildet ist, mit einer Eingabevorrichtung, insbesondere einer Tastatur, zur Eingabe von Zahlen, Zeichen und/oder zur Auswahl von Telefonnummern, umfassend eine Steuervorrichtung, die das Absetzen eines Rufes in dem Mobilfunknetz steuert. Die Erfindung betrifft ferner eine Signalfolge, die von einem Mobilfunk-Endgerät zum Verbindungsaufbau mit einem weiteren Telekommunikationsendgerät gesendet wird. Schließlich betrifft die Erfindung ein Verfahren zum Verbinden eines Mobilfunk-Endgeräts mit einem weiteren Telekommunikations-Endgerät.

Aus der EP 0 927 483 B1 ist ein Mobilfunk-Endgerät für die elektronische Nachrichtenübermittlung in Funknetzen bekannt, das eine in das Mobilfunk-Endgerät eingebaute Wählautomatik aufweist, die derart ausgebildet ist, selbstständig die Rufzuteilung zu einem von mindestens zwei möglichen Funknetzen vorzunehmen, nämlich zu einem Primärfunknetz, um dorthin durch das Mobilfunk-Endgerät automatisch und/oder nach Eingabe einer PIN-Nummer eine Verbindung aufzubauen und zu mindestens einem Sekundärfunknetz, wobei die Wählautomatik derart ausgebildet ist, abhängig von einer Auswertung nach Auswahlkriterien entweder den Ruf an das Sendeteil des Mobilfunk-Endgeräts zu führen und im Primärfunknetz abzusetzen oder einen Zugang zu dem Sekundärfunknetz herzustellen und den Ruf an das Sendeteil des Mobilfunk-Endgeräts zu führen und in das Sekundärfunknetz abzusetzen.

Es ist ferner eine Systemkontrolle vorgesehen, über die die für die Auswertung erforderlichen Daten, Prozeduren, Zuordnungen und/oder Informationen laufend dem aktuellen Stand anpassbar sind. Mit diesem Mobilfunk-Endgerät ist es möglich, in Abhängigkeit von Auswahlkriterien wie Tag des Rufes, Uhrzeit des Rufes, Inlandsgespräch, Auslandsgespräch, unternehmenseigene Leitungen oder Netze, Tarifpläne von mindestens zwei Netzbetreibern oder Diensteanbietern entweder physikalisch in ein erstes Mobilfunknetz einen Ruf abzusetzen oder physikalisch in einem zweiten Mobilfunknetz den Ruf abzusetzen, je nachdem welche der Kriterien in dem einen oder dem anderen Funknetz vorteilhafter erscheinen. So kann beispielsweise an gewissen Tagen ein in einem Primärfunknetz durchgeführtes Telefonat kostengünstiger sein als an anderen Tagen. Um diese Auswahl treffen zu können, müssen allerdings immer zwei Funknetze vorhanden sein. Dieses ist nicht überall gegeben.

Aus diesem Grund ist es Aufgabe der vorliegenden Erfindung, ein Telekommunikationssystem, ein Mobilfunk-Endgerät, eine Signalfolge und ein Verfahren zum Verbinden eines Mobilfunk-Endgeräts mit einem weiteren Telekommunikations-Endgerät anzugeben, das eine vorteilhafte Verbindung auch dann ermöglicht, wenn nur ein Mobilfunknetz zur Verfügung steht.

Gelöst wird diese Aufgabe durch ein Telekommunikationssystem mit einem Mobilfunknetz und einem Netzwerk, wobei in dem Netzwerk wenigstens eine Knotenvorrichtung vorgesehen ist, wobei im Mobilfunknetz ein Mobilfunk-Endgerät angeordnet ist, das für die elektronische Nachrichtenübermittlung in dem Mobilfunknetz ausgebildet ist, wobei das Mobilfunk-Endgerät eine Steuervorrichtung umfasst, die das Absetzen von einem Ruf in dem Mobilfunknetz steuert, das dadurch weitergebildet ist, dass die Steuervorrichtung des Mobilfunk-Endgerätes nach Eingabe einer Telefonnummer einer Bedienperson und nach vorgebbaren Auswahlkriterien einen Ruf zu einem weiteren Telekommunikationsendgerät, das über die eingegebene Telefonnummer erreichbar ist, entweder mit der eingegebenen Telefonnummer oder mit einer von der eingegebenen Telefonnummer nach vorgebbaren Kriterien veränderten Telefonnummer in dem Mobilfunknetz absetzt. Im zweiten Fall wird somit ein Ruf mit einer Telefonnummer abgesetzt, die nicht mehr der gewählten bzw. eingegebenen Telefonnummer entspricht. Insbesondere ist auch nicht nur eine neue oder ergänzte Vorwahl vorgesehen, sondern eine völlig geänderte Telefonnummer. Hierunter wird eine Telefonnummer verstanden, die im Vergleich zu der eingegebenen Telefonnummer eine andere Struktur im Hinblick auf die Ziffernfolge hat.

Die veränderte Telefonnummer entspricht einer von der Knotenvorrichtung vorgegebenen Telefonnummer, mit der die Knotenvorrichtung von dem Mobilfunk-Endgerät erreicht werden kann. Vorzugsweise wird eine vorgebbare Anzahl von verschiedenen veränderten Telefonnummern von der Knotenvorrichtung vorgegeben.

Vorzugsweise ist das Netzwerk ein wenigstens abschnittsweise kabelgebundenes Netzwerk. Alternativ kann das Netzwerk ein weiteres Mobilfunknetz sein oder das Mobilfunknetz, in dem das Mobilfunk-Endgerät angeordnet ist. Bei einem als Mobilfunknetz ausgebildeten Netzwerk kann die Knotenvorrichtung ausgebildet sein, um eine vorgebbare Anzahl von Anrufen mit einer vorgebbaren Anzahl von Telefonnummern zu empfangen und weiterzuleiten. Beispielsweise kann dann eine Vorrichtung verwendet werden, die eine vorgebbare Anzahl von SIM-Karten aufnehmen kann.

Durch die Auswahlmöglichkeit des Absetzens der eingegebenen bzw. gewählten Telefonnummer bzw. eine nach vorgebbaren Kriterien veränderten Telefonnummer ist es möglich, physikalisch zwischen zwei verschiedenen Wegen der Verbindung von einem Mobilfunk-Endgerät zu einem weiteren Telekommunikations-Endgerät zu wählen, wobei nach vorgebbaren Kriterien der bevorzugte Weg ausgewählt werden kann. Diese Auswahl findet im Mobilfunk-Endgerät statt. Dies kann beispielsweise danach funktionieren, dass ausgewählt wird, über welchen physikalischen Weg die günstigste Verbindung gewählt werden kann. Hierzu können im Mobilfunk-Endgerät anhand des mit dem Mobilfunk-Provider des Kunden, der das Mobilfunk-Endgerät betreibt, abgemachten Tarifs, der möglicherweise unterschiedliche Telefonkosten in Abhängigkeit des Tages, der Uhrzeit und ob es sich bei dem angerufenen Telekommunikationsendgerät um ein Telekommunikationsendgerät handelt, das in einem weiteren Mobilfunknetz erreichbar ist bzw. in einem Festnetz, unterschiedliche Kosten hinterlegt sein, die eine Auswahl des physikalischen Wegs des Rufes ermöglichen. Beispielsweise kann über eine vorgebbare Knotenvorrichtung eines, insbesondere wenigstens abschnittsweise kabelgebundenen, Netzwerks möglicherweise günstiger telefoniert werden. Dieses ist insbesondere auch dann interessant, wenn Auslandsgespräche geführt werden sollen. Anhand der vorgebbaren Auswahlkriterien setzt die Steuervorrichtung des Mobilfunk-Endgerätes einen Ruf mit der eingegebenen Telefonnummer ab oder es wird eine Verbindung des Mobilfunk-Endgeräts mit einer vorgebbaren Knotenvorrichtung hervorgerufen, und zwar mit einer nach vorgebbaren Kriterien veränderten Telefonnummer. Hierdurch kann eine direkte Verbindung zwischen dem Mobilfunk-Endgerät und der Knotenvorrichtung hergestellt werden.

Vorzugsweise gibt die vorgebbare Knotenvorrichtung den Ruf an das weitere Telekommunikations-Endgerät über das, insbesondere wenigstens abschnittsweise kabelgebundene, Netzwerk mit der in dem Mobilfunk-Endgerät eingegebenen Telefonnummer weiter. Die Knotenvorrichtung stellt beispielsweise eine Relation zwischen der geänderten Telefonnummer und der tatsächlich eingegebenen Telefonnummer her und verwendet für die Weiterführung des Rufes die über die geänderte Telefonnummer in der Knotenvorrichtung ermittelte tatsächlich eingegebene Telefonnummer.

Vorzugsweise umfasst das Mobilfunk-Endgerät eine Speichervorrichtung, wobei die für die vorgebbaren Auswahlkriterien relevanten Daten in der Speichervorrichtung gespeichert sind. Vorzugsweise werden die Daten über eine Datenverbindung des Mobilfunk-Endgeräts zu der Knotenvorrichtung oder einem Server in einem Datennetz aktualisiert. Das Datennetz kann hierbei das Internet oder ein Intranet sein. Die Datenverbindung zwischen dem Mobilfunk-Endgerät und der Knotenvorrichtung kann während eines Telefonats geschehen. Hierbei können dann die für die Auswahlkriterien relevanten Daten in das Mobilfunk-Endgerät geladen werden. Diese sind in Abhängigkeit des Mobilfunktarifs des Kunden, der der Besitzer des Mobilfunk-Endgerätes ist, zu erstellen oder zu generieren. So können die Daten beispielsweise völlig unterschiedlich aussehen, wenn beispielsweise ein Tarif für ein Mobilfunk-Endgerät eine so genannte Flatrate für Festnetzgespräche vorsieht, wohingegen ein anderer Tarif, beispielsweise kostenfreies Telefonieren am Wochenende in das gleiche Mobilfunknetz, vorsieht. Im zweiten Fall macht es Sinn, beispielsweise das weitere Telekommunikations-Endgerät, das im gleichen Mobilfunknetz beim gleichen Provider unter Vertrag steht, direkt von dem Mobilfunk--Endgerät ausgehend ohne Änderungen der Telefonnummer anzuwählen, wohingegen es beispielsweise bei Telefonanrufen ins Ausland Sinn machen kann, die Telefonnummern nach vorgebbaren Kriterien zu verändern und über die Knotenvorrichtung, die über das, insbesondere wenigstens teilweise kabelgebundene, Netzwerk erreicht werden kann, anzuwählen. Von dort können dann üblicherweise deutlich günstigere Telefonate ins Ausland geführt werden als direkt über das Mobilfunknetz über den mit dem Provider vereinbarten Tarif. Im Rahmen der Erfindung wird unter einem Netzwerk insbesondere ein Telekommunikationsnetzwerk verstanden.

Vorzugsweise entspricht die veränderte Telefonnummer einer oder mehreren Kurzwahlrufnummer(n) und/oder einer Telefonnummer und/oder mehreren Telefonnummern mittels der die Knotenvorrichtung ausgewählt bzw. angerufen werden kann, so dass eine Verbindung zwischen dem Mobilfunk-Endgerät und der Knotenvorrichtung hergestellt wird. In einer besonders bevorzugten Ausführungsform der Erfindung wird für den Ruf mit der veränderten Telefonnummer von dem Mobilfunk-Endgerät in einer gesendeten Signalfolge die eigene Kennung und die veränderte Telefonnummer gesendet. In der vorgebbaren Knotenvorrichtung erfolgt eine eineindeutige Zuordnung der veränderten Telefonnummer zu der tatsächlich gewählten Telefonnummer. In der vorgebbaren Knotenvorrichtung kann nämlich in Art einer Tabelle oder einer Datenbank pro Mobilfunk-Endgerät gespeichert werden, welche veränderte Telefonnummer mit der tatsächlich gewählten eingegebenen Telefonnummer eineindeutig zusammenhängt.

Bei mehreren Mobilfunk-Endgeräten kann es vorkommen, dass die gleiche veränderte Telefonnummer mehrfach belegt ist. In diesem Fall existiert eine eindeutige Zuordnung der veränderten Telefonnummer zu der eingegebenen Telefonnummer. Die Zuordnung ist für jedes einzelne Mobilfunk-Endgerät allerdings eineindeutig. Für ein erstes Mobilfunk-Endgerät ist beispielsweise eine geänderte Telefonnummer einer eingegebenen Telefonnummer zugeordnet. Für ein zweites Mobilfunk-Endgerät kann die gleiche geänderte Telefonnummer einer anderen eingegebenen Telefonnummer zugeordnet sein oder aber möglicherweise sogar die gleiche eingegebene Telefonnummer.

Für eine in dem Mobilfunk-Endgerät noch nicht vorgesehene Kurzwahlnummer bzw. veränderte Telefonnummer, die demgemäß auch noch nicht in der vorgebbaren Knotenvorrichtung gespeichert ist, kann eine gesonderte Telefonnummer vorgesehen sein. In der gesendeten Signalfolge ist denn auch die gewählte bzw. eingegebene Telefonnummer enthalten. Diese gilt allerdings nur für eingegebene Telefonnummern, die der Knotenvorrichtung noch nicht bekannt sind. Vorzugsweise wird in der vorgebbaren Knotenvorrichtung eine Zuordnung der Signalfolge aus Kennung und der veränderten Telefonnummer zu der eingegebenen Telefonnummer vorgenommen. Die vorgebbare Knotenvorrichtung setzt dann vorzugsweise den Ruf mit der eingegebenen Telefonnummer fort.

Die Aufgabe wird ferner durch ein Mobilfunk-Endgerät gelöst, das für die elektronische Nachrichtenübermittlung in einem Mobilfunknetz ausgebildet ist, und das eine Eingabevorrichtung, insbesondere eine Tastatur, zur Eingabe von Zahlen, Zeichen und/oder zur Auswahl von Telefonnummern aufweist und eine Steuervorrichtung umfasst, die das Absetzen eines Rufes in dem Mobilfunknetz steuert, wobei das Mobilfunk-Endgerät dadurch weitergebildet ist, dass die Steuervorrichtung des Mobilfunk-Endgerätes nach Eingabe einer Telefonnummer einer Bedienperson und nach vorgebbaren Auswahlkriterien einen Ruf zu einem weiteren Telekommunikationsendgerät, das über die eingegebene Telefonnummer erreichbar ist, entweder mit der eingegebenen Telefonnummer oder mit einer von der eingegebenen Telefonnummer nach vorgebbaren Kriterien veränderten Telefonnummer in dem Mobilfunknetz absetzt. Die Steuervorrichtung setzt hierbei selbstständig entweder die eingegebene Telefonnummer oder die nach vorgebbaren Kriterien veränderte Telefonnummer in dem Mobilfunknetz ab. Unter Absetzen ist insbesondere gemeint, dass eine Rufverbindung in dem Mobilfunknetz zu einer Knotenvorrichtung und schlussendlich zu dem gewünschten weiteren Telekommunikationsendgerät durchgeführt wird. Mobilfunkendgeräte sind vorzugsweise Geräte, über die Informationen und/oder Daten elektronisch in für den Versand geeignete Signale gewandelt und abgesandt und/oder die empfangenen Informationen und/oder Daten in lesbare und/oder hörbare Informationen und/oder Daten übertragen und empfangen werden. Zu entsprechenden Mobilfunk-Endgeräten gehören beispielsweise Mobilfunktelefone. Ein Telekommunikations-Endgerät kann demgemäß auch ein Mobilfunk-Endgerät sein oder ein Festnetztelefon oder ein Festnetztelefax und ähnliches.

Vorzugsweise umfasst das Mobilfunk-Endgerät eine Speichervorrichtung, wobei die für die vorgebbaren Auswahlkriterien relevanten Daten in der Speichervorrichtung gespeichert sind. Vorzugsweise sind die Daten über eine Datenverbindung zu einer vorgebbaren Knotenvorrichtung eines, insbesondere wenigstens abschnittsweise kabelgebundenen, Netzwerkes, beispielsweise einem Festnetz oder einem oder dem Mobilfunknetz, oder einem Server in einem Datennetz, aktualisierbar. Vorzugsweise ist für eine vorgebbare Anzahl von veränderten Telefonnummern eine vorgebbare Anzahl von eingebbaren Telefonnummern eineindeutig zugeordnet. Beispielsweise können 200 Telefonnummern, die sich beispielsweise in einem Nummernspeicher befinden, eineindeutig Kurzwahlnummern oder entsprechend variierten bzw. geänderten Telefonnummern zugeordnet werden, die, sofern die variierte bzw. geänderte Telefonnummer gewählt werden soll, aus dem Speicher gelesen und mittels der Steuervorrichtung abgesetzt werden können, und zwar anstelle der eingegebenen Telefonnummern. Hierdurch ist eine sehr sichere Variante des Betriebs des Mobilfunk-Endgeräts gegeben, der insbesondere eine sehr effiziente und sichere Zuordnung der geänderten Telefonnummer, die abgesendet wurde, in einer vorgebbaren Knotenvorrichtung ermöglicht, in der die gewählte Telefonnummer in die eingegebene Telefonnummer konvertiert werden kann.

Die Aufgabe wird ferner durch eine Signalfolge gelöst, die von einem Mobilfunk-Endgerät zum Verbindungsaufbau mit einem weiteren Telekommunikations-Endgerät gesendet wird, wobei die Signalfolge eine Kennung des Mobilfunk-Endgerätes und eine Kurznummer bzw. Telefonnummer, die unterschiedlich zu einer von einer Bedienperson eingegebenen Telefonnummer ist, umfasst. Alternativ kann die Kennung des Mobilfunk-Endgeräts auch aus Merkmalen des zugrundeliegenden Telekommunikationsnetzes ermittelt werden. Das Mobilfunknetz sendet dann die Kennung von sich aus. Im Rahmen der Erfindung beinhaltet das Senden der Kennung durch das Mobilfunk-Endgerät auch das Senden der Kennung ausgehend von dem Mobilfunknetz. Durch Vorsehen der Kennung des Mobilfunk-Endgerätes und der Kurznummer bzw. geänderten Telefonnummer ist es in einer vorgebbaren Knotenvorrichtung eineindeutig möglich, die eingegebene Telefonnummer zu evaluieren und für die Weitergabe in dem Kommunikationsnetzwerk, das sich an die vorgebbare Knotenvorrichtung anschließt, zu verwenden. Vorzugsweise sind die Kurznummer bzw. die geänderte Telefonnummer und die gewählte Telefonnummer eineindeutig zugeordnet. Die geänderte Telefonnummer ist wie vorstehend beschrieben geändert.

Bei Betrachtung eines einzigen Mobilfunk-Endgeräts ist eine eineindeutige Zuordnung der geänderten Telefonnummer zu der eingegebenen Telefonnummer möglich. Bei mehreren Mobilfunk-Endgeräten ist die Zuordnung eindeutig. Für jedes Mobilfunk-Endgerät bzw. für jede Kennung ist eine eineindeutige Zuordnung gegeben.

Die Erfindung wird ferner durch ein Verfahren zum Verbinden eines Mobilfunk-Endgeräts mit einem weiteren Telekommunikations-Endgerät gelöst, wobei nach Eingabe oder Wahl einer Telefonnummer, die dem weiteren Telekommunikations-Endgerät zugeordnet ist, von dem Mobilfunk-Endgerät in einer Steuervorrichtung anhand von vorgebbaren Auswahlkriterien entweder ein Ruf mit der eingegebenen oder gewählten Telefonnummer in ein Mobilfunknetz abgesetzt wird oder eine Zuordnung der eingegebenen oder gewählten Telefonnummer zu einer von der eingegebenen oder gewählten Telefonnummer nach vorgebbaren Kriterien veränderten Telefonnummer in das Mobilfunknetz abgesetzt wird. Vorzugsweise ruft das Absetzen der nach vorgebbaren Kriterien veränderten Telfonnummer im Mobilfunknetz eine Verbindung mit einer vorgebbaren Knotenvorrichtung in einem, insbesondere wenigstens abschnittsweise kabelgebundenen, Netzwerk hervor. Vorzugsweise erfolgt in der Knotenvorrichtung eine Zuordnung einer Signalfolge des Mobilfunk-Endgeräts, umfassend wenigstens eine Mobilfunk-Endgerätkennung und die veränderte Telefonnummer zu der eingegebenen oder gewählten Telefonnummer. Vorzugsweise setzt die Knotenvorrichtung den Ruf mit der eingegebenen oder gewählten Telefonnummer in das Netzwerk ab.

Es ist ferner vorzugsweise ein Mobilfunk-Endgerätprogramm mit Programmcodemitteln vorgesehen, die ausgebildet sind, das erfindungsgemäße Verfahren, das vorstehend angegeben ist, auszuführen.

Die Erfindung wird nachstehend ohne Beschränkung des allgemeinen Erfindungsgedankens anhand eines Ausführungsbeispiels unter Bezugnahme auf die Zeichnung beschrieben, wobei bezüglich aller im Text nicht näher erläuterten erfindungsgemäßen Einzelheiten ausdrücklich auf die Zeichnung verwiesen wird. Es zeigt:

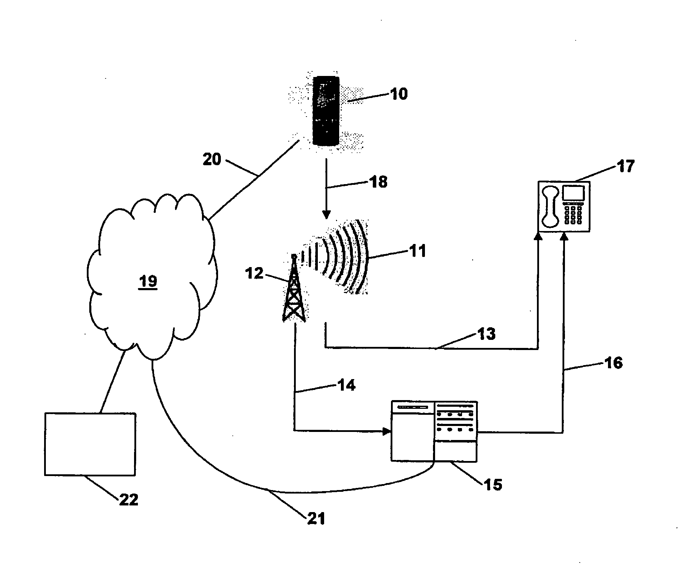

- Fig. 1: eine schematische Darstellung des erfindungsgemäßen Telekommunikationssystems.

Fig. 1 zeigt schematisch eine Darstellung des erfindungsgemäßen Telekommunikationssystems. Ein Mobilfunk-Endgerät 10 setzt einen Ruf 18 in ein Mobilfunknetz 11 ab. Das Mobilfunknetz 11 hat als Relaisstation einen Mobilfunkturm 12, der auch schematisch dargestellt ist. Über die Relaisstation des Mobilfunkturms 12 kann wie an sich üblich eine direkte Verbindung 13 mit einem weiteren Telekommunikations-Endgerät 17 ermöglicht werden. Die direkte Verbindung kann direkt von einem Mobilfunk-Endgerät 10 zu einem weiteren nicht dargestellten Mobilfunk-Endgerät über den Mobilfunkturm 12 geführt werden, wenn beide Mobilfunk-Endgeräte im Einzugsbereich des Mobilfunkturms 12 sind. Das Gespräch kann allerdings auch über mehrere Mobilfunktürme geführt werden bzw. wie dieses an sich üblich ist, über den Mobilfunkturm bzw. die von diesem ausgestrahlten Wellen zu einer Relaisstation in einem kabelgebundenen Netz über mehrere Knotenvorrichtungen bzw. Relaisstationen dann zu dem weiteren Mobilfunk-Endgerät, das nicht dargestellt ist. In diesem Fall ist gemäß Fig. 1 das weitere Telekommunikations-Endgerät 17 ein Festnetztelefon, das demgemäß nur über ein Festnetz erreicht werden kann. Auch eine Verbindung über diverse Knotenvorrichtungen und beispielsweise über zunächst ein Funknetz, dann ein Festnetz, zwischenzeitlich beispielsweise ein Funknetz über Satelliten, anschließend wieder ein Festnetz usw. wird im Rahmen dieser Erfindung als direkte Verbindung 13 bezeichnet.

Alternativ hierzu kann eine Telekommunikationsverbindung zwischen dem Mobilfunk-Endgerät 10 und dem Telekommunikations-Endgerät 17 über eine alternative Verbindung 14, die über eine Knotenvorrichtung 15 und die Verbindung 16 führt, aufgebaut werden. Die Knotenvorrichtung 15 ist nun eine spezielle Knotenvorrichtung, die über die von der tatsächlich gewählten bzw. eingegebenen Rufnummer in dem Mobilfunk-Endgerät über eine hiervon geänderte Telefonnummer erreicht werden kann. Das Mobilfunk-Endgerät 10 variiert demnach nach vorgebbaren Kriterien die eingegebene Telefonnummer ab, um über die alternative Verbindung 14 zu der Knotenvorrichtung 15 zu gelangen. In der Knotenvorrichtung 15 wird über die Kennung des Mobilfunk-Endgerätes 10 und die geänderte Telefonnummer ein Rückschluss auf die eingegebene Telefonnummer getroffen und der Ruf über die Verbindung 16 mit der eingegebenen Telefonnummer zu dem Telekommunikations-Endgerät 17 weitergeführt. Dieses funktioniert wie folgt:

Angenommen, in dem Mobilfunk-Endgerät 10 sind 200 Telefonnummern in dem Telefonnummernspeicher gespeichert. Diese gespeicherten Telefonnummern erhalten nun eine Zuordnung zu einer anderen Telefonnummer mit beispielsweise einer Vorwahl von Frankfurt am Main (069) und sieben Ziffern, beispielsweise 1000xxx, wobei xxx für die Zahlen 000 bis 199 stehen. Wenn beispielsweise die Telefonnummer 0171 1234567 eingegeben würde und diese dem ersten Speicherplatz in dem Rufnummernspeicher entspräche, würde bei einem Absetzen des Rufs zur geänderten Telefonnummer die Telefonnummer 069 1000000 gewählt werden. Dies führt zu einer Verbindung des Mobilfunk-Endgeräts 10 mit der Knotenvorrichtung 15. Da das Mobilfunk-Endgerät 10 eine Kennung mitsendet und in der Knotenvorrichtung 15 entsprechend auch eine Tabelle existiert, die die abgesetzte Telefonnummer in Verbindung mit der Kennung des Mobilfunk-Endgerätes 10 in eine Beziehung zu der tatsächlich gewählten Telefonnummer 0171 1234567 setzt, ist es der Knotenvorrichtung 15 ermöglicht, mit der tatsächlich eingegebenen Telefonnummer den Ruf fortzusetzen. Entsprechend funktioniert dieses mit den weiteren 199 möglichen Telefonnummern, die im Telefonnummernspeicher des Mobilfunk-Endgeräts 10 gespeichert sind und die mit weiteren 199 geänderten Telefonnummern in Beziehung gesetzt sind. Die geänderten Telefonnummern führen alle zu der Knotenvorrichtung 15. Ein Abgleich der entsprechenden Telefonnummern kann über eine Telefonverbindung (beispielsweise über die alternative Verbindung 14) geführt werden oder aber alternativ über eine Verbindung 20 und eine Verbindung 21, die über eine Datenverbindung, z.B. das Internet 19 eine Verbindung zwischen dem Mobilfunk-Endgerät 10 und der Knotenvorrichtung 15 ermöglicht. Alternativ kann auch ein Server 22, auf dem beispielsweise eine entsprechende Software für das Mobilfunk-Endgerät 10 abgerufen werden kann, für einen entsprechenden Datenausgleich sorgen. Der Server 22 kann auch dem Mobilfunk-Endgerät 10 übermitteln, welche veränderten Telefonnummern mit eingegebenen Telefonnummern korrespondieren. Der Server 22 kann somit dem Mobilfunk-Endgerät 10 die vorgebbaren Kriterien und/oder vorgebbaren Auswahlkriterien zur Verfügung stellen. Dieses kann soweit geführt werden, dass das erfindungsgemäße Verfahren wenigstens teilweise, nämlich insbesondere im Hinblick auf die Veränderung der eingegebenen Telefonnummer, im Server durchgeführt wird.

Vorgebbare Auswahlkriterien, mittels der die Steuervorrichtung des Mobilfunk-Endgeräts 10 entscheidet, ob nun die direkte Verbindung 13 oder die alternative Verbindung 14 gewählt wird, hängen beispielsweise vom Tarif des Mobilfunk-Providers ab, der für das Mobilfunk-Endgerät 10 gültig ist und ferner der Tageszeit, des Wochentags, der eingegebenen Rufnummer, die sich durch unterschiedliche Mobilfunk-Telefonnetze oder dadurch unterscheiden können, dass es ein Inlandsgespräch ist, ein Ortsgespräch oder ein Auslandsgespräch usw. Die Entscheidung kann allerdings auch aufgrund anderer Kriterien wie beispielsweise die Leistung der direkten Verbindung 13 im Vergleich zur alternativen Verbindung 14 sein, beispielsweise die ermöglichte Datenmenge, die in einer vorgebbaren Zeit strömen kann. Ein Auswahlkriterium kann auch von Zusatzdiensten abhängen, die beispielsweise in der direkten Verbindung 13 möglich sind oder nur in der alternativen Verbindung 14. So kann beispielsweise über die alternative Verbindung 14 es ermöglicht sein, dass gewissen vorbestimmbaren Zielrufnummern ein Bild des Besitzers des Mobilfunk-Endgeräts 10 mitgesendet wird oder aber weitere Daten, die möglicherweise über eine direkte Verbindung nicht gesendet werden könnten.

### Bezugszeichenliste

- 10: Mobilfunk-Endgerät
- 11: Mobilfunknetz
- 12: Mobilfunkturm
- 13: direkte Verbindung
- 14: alternative Verbindung
- 15: Knotenvorrichtung
- 16: Verbindung
- 17: Telekommunikations-Endgerät
- 18: Ruf
- 19: Internet
- 20: Verbindung
- 21: Verbindung
- 22: Server

## Patentansprüche

1. Telekommunikationssystem mit einem Mobilfunknetz (11) und einem Netzwerk (16), wobei in dem Netzwerk (16) wenigstens eine Knotenvorrichtung (15) vorgesehen ist, wobei im Mobilfunknetz (11) ein Mobilfunk-Endgerät (10) angeordnet ist, das für die elektronische Nachrichtenübermittlung in dem Mobilfunknetz (11) ausgebildet ist, wobei das Mobilfunk-Endgerät (10) eine Steuervorrichtung umfasst, die das Absetzen von einem Ruf in dem Mobilfunknetz (11) steuert, **dadurch gekennzeichnet, dass** die Steuervorrichtung des Mobilfunk-Endgerätes (10) nach Eingabe einer Telefonnummer einer Bedienperson und nach vorgebbaren Auswahlkriterien einen Ruf (18) zu einem weiteren Telekommunikationsendgerät (17), das über die eingegebene Telefonnummer erreichbar ist, entweder mit der eingegebenen Telefonnummer oder mit einer von der eingegebenen Telefonnummer nach vorgebbaren Kriterien veränderten Telefonnummer in dem Mobilfunknetz (11) absetzt.

2. Telekommunikationssystem nach Anspruch 1, **dadurch gekennzeichnet, dass** die nach vorgebbaren Kriterien veränderte Telefonnummer eine Verbindung des Mobilfunk-Endgeräts (10) mit einer vorgebbaren Knotenvorrichtung (15) hervorruft.

3. Telekommunikationssystem nach Anspruch 2, **dadurch gekennzeichnet, dass** die vorgebbare Knotenvorrichtung (15) den Ruf (18) an das weitere Telekommunikations-Endgerät (17) über das Netzwerk (16) weitergibt.

4. Telekommunikationssystem nach einem der Ansprüche 1 bis 3, **dadurch gekennzeichnet, dass** das Mobilfunk-Endgerät (10) eine Speichervorrichtung umfasst, wobei die für die vorgebbaren Auswahlkriterien relevanten Daten in der Speichervorrichtung gespeichert sind.

5. Telekommunikationssystem nach Anspruch 4, **dadurch gekennzeichnet, dass** die Daten über eine Datenverbindung des Mobilfunk-Endgeräts (10) zu der Knotenvorrichtung (15) oder einem Server (22) in einem Datennetz (19) aktualisiert werden.

6. Telekommunikationssystem nach einem der Ansprüche 1 bis 5, **dadurch gekennzeichnet, dass** die veränderte Telefonnummer einer Kurzwahlrufnummer entspricht.

7. Telekommunikationssystem nach einem der Ansprüche 1 bis 6, **dadurch gekennzeichnet, dass** für den Ruf (18) mit der veränderten Telefonnummer von dem Mobilfunk-Endgerät (10) in einer gesendeten Signalfolge die eigene Kennung und die veränderte Telefonnummer gesendet werden.

8. Telekommunikationssystem nach Anspruch 7, **dadurch gekennzeichnet, dass** in der vorgebbaren Knotenvorrichtung (15) eine Zuordnung der Signalfolge aus Kennung und der veränderten Telefonnummer zu der eingegebenen Telefonnummer vorgenommen wird.

9. Telekommunikationssystem nach Anspruch 8, **dadurch gekennzeichnet, dass** die vorgebbare Knotenvorrichtung (15) den Ruf mit der eingegebenen Telefonnummer weitergibt.

10. Mobilfunk-Endgerät (10), das für die elektronische Nachrichtenübermittlung in einem Mobilfunknetz (11) ausgebildet ist, mit einer Eingabevorrichtung zur Eingabe von Zahlen, Zeichen und/oder zur Auswahl von Telefonnummern, umfassend eine Steuervorrichtung, die das Absetzen eines Rufes in dem Mobilfunknetz (11) steuert, **dadurch gekennzeichnet, dass** die Steuervorrichtung des Mobilfunk-Endgerätes (10) nach Eingabe einer Telefonnummer einer Bedienperson und nach vorgebbaren Auswahlkriterien einen Ruf (18) zu einem weiteren Telekommunikationsendgerät (17), das über die eingegebenen Telefonnummer erreichbar ist, entweder mit der eingegeben Telefonnummer oder mit einer von der eingegebenen Telefonnummer nach vorgebbaren Kriterien veränderten Telefonnummer in dem Mobilfunknetz (11) absetzt.

11. Mobilfunk-Endgerät (10) nach Anspruch 10, **dadurch gekennzeichnet, dass** eine Speichervorrichtung umfasst ist, wobei die für die vorgebbaren Auswahlkriterien relevanten Daten in der Speichervorrichtung gespeichert sind.

12. Mobilfunk-Endgerät (10) nach Anspruch 11, **dadurch gekennzeichnet, dass** die Daten über eine Datenverbindung (14, 20, 21) zu einer vorgebbaren Knotenvorrichtung (15) eines Netzwerkes (16) oder einen Server (22) in einem Datennetz (19) aktualisierbar sind.

13. Mobilfunk-Endgerät (10) nach einem der Ansprüche 10 bis 12, **dadurch gekennzeichnet, dass** für eine vorgebbare Anzahl von eingebbaren Telefonnummern eine vorgebbare Anzahl von veränderten Telefonnummern eineindeutig zugeordnet wird.

14. Signalfolge, die von einem Mobilfunk-Endgerät (10) oder einem Mobilfunknetz zum Verbindungsaufbau des Mobilfunk-Endgeräts (10) mit einem weiteren Telekommunikations-Endgerät (17) gesendet wird, umfassend eine Kennung des Mobilfunk-Endgerätes (10) und eine Telefonnummer, die geändert zu einer von einer Bedienperson eingegebenen Telefonnummer ist.

15. Signalfolge nach Anspruch 14, **dadurch gekennzeichnet, dass** die geänderte Telefonnummer und die gewählte Telefonnummer eineindeutig zugeordnet sind.

16. Verfahren zum Verbinden eines Mobilfunk-Endgeräts (10) mit einem weiteren Telekommunikations-Endgerät (17), wobei nach Eingabe oder Wahl einer Telefonnummer, die dem weiteren Telekommunikations-Endgerät (17) zugeordnet ist, von dem Mobilfunk-Endgerät (10) in einer Steuervorrichtung anhand von vorgebbaren Auswahlkriterien entweder ein Ruf mit der eingegebenen oder gewählten Telefonnummer in ein Mobilfunknetz (11) abgesetzt wird oder eine Zuordnung der eingegebenen oder gewählten Telefonnummer zu einer von der eingegebenen oder gewählten Telefonnummer nach vorgebbaren Kriterien veränderten Telefonnummer in das Mobilfunknetz (11) abgesetzt wird.

17. Verfahren nach Anspruch 16, **dadurch gekennzeichnet, dass** das Absetzen der nach vorgebbaren Kriterien veränderten Telefonnummer im Mobilfunknetz (11) eine Verbindung mit einer vorgebbaren Knotenvorrichtung in einem Netzwerk (16) hervorruft.

18. Verfahren nach Anspruch 17, **dadurch gekennzeichnet, dass** in der Knotenvorrichtung (15) eine Zuordnung einer Signalfolge des Mobilfunk-Endgeräts (10), umfassend wenigstens eine Mobilfunk-Endgerätkennung und die veränderte Telefonnummer, zu der eingegebenen oder gewählten Telefonnummer erfolgt.

19. Verfahren nach Anspruch 18, **dadurch gekennzeichnet, dass** die Knotenvorrichtung (15) den Ruf mit der eingegebenen oder gewählten Telefonnummer in das Netzwerk (16) absetzt.

20. Mobilfunk-Endgerätprogramm mit Programmcodemitteln, die angepasst sind, um das Verfahren nach einem der Ansprüche 16 bis 19 auszuführen.
